# EUROPEAN PATENT SPECIFICATION

(11) **EP 3 471 114 B1**
(45) Date of publication and mention of the grant of the patent: **26.06.2024**
(21) Application number: 17461620.1
(22) Date of filing: 14.10.2017
(51) Int. Cl.: G01D 5/22, H01F 7/08, H01F 3/02, H01F 7/11, H01F 7/16

(54) **LVDT CORE FORMED OF METAL SHEET**
AUS METALLBLECH GEFORMTER LVDT-KERN
NOYAU LVDT FORMÉ D'UNE FEUILLE MÉTALLIQUE

(43) Date of publication of application: 17.04.2019
(73) Proprietor: Hamilton Sundstrand Corporation, Charlotte, NC 28217 (US)
(72) Inventor: Cis, Marcin, Lutynia (PL); Bielen, Michal, 51-317 Wroclaw (PL)
(74) Representative: Dehns

(56) References cited:
- EP-A2- 0 205 754
- WO-A1-97/24746
- WO-A1-2018/153784
- GB-A- 2 040 470
- US-A- 3 947 788
- US-A- 5 789 918

## Description

### FIELD

The present disclosure generally relates to Linear Variable Differential Transducers comprising magnetic cores and methods for forming such a linear variable differential transducer having a magnetic core.

### BACKGROUND

Magnetic cores are used to contain and guide a magnetic field in an electromagnetic device. The magnetic core may also strengthen the magnetic field. An example of an electromagnetic device which may include a magnetic core is a Linear Variable Differential Transducer (LVDT). LVDTs are used to detect or measure the displacement of moving components, such as a spool in a servovalve, or in any kind of actuator. An LVDT generally comprises three wire coils and a magnetic core.

EP0205754 discloses a ferromagnetic core for an inductive displacement sensor wherein the core consists of a sleeve which is wound out of a sheet-metal strip and which has a continuous slit and can be clamped onto a nonferromagnetic guide rod as a friction fit.

GB2040470 discloses a transformer containing a mobile magnetic core comprising a longitudinal slot. US3947788 discloses a solenoid coil connected in series with an electric motor. WO97/24746 discloses an armature for magnetic trigger systems. WO 2018/153784 discloses an inductive position sensor having a cylindrical coil winding.

### SUMMARY

The present invention provides a linear variable differential transducer as claimed in claim 1. The present invention still further provides a method of forming a linear variable differential transducer as claimed in claim 7.

The present disclosure provides a linear variable differential transducer comprising a tubular magnetic core formed from a sheet, and a primary coil and at least one secondary coil, each coil positioned around a portion of a length of the magnetic core.

The primary coil is provided to generate a magnetic field in the linear variable differential transducer (LVDT) when an electrical current is provided to the primary coil.

The primary coil and the at least one secondary coil being positioned around a portion of a length of the magnetic core refers to the windings of the coil being positioned around, i.e.. wound around the portion of the length of the coil.

The transducer may comprise an electrical power supply connected to the primary coil for generating a current therein.

When the power supply supplies power to the primary coil, a current is generated in the primary coil. The power supply may supply an alternating current to the primary coil, resulting in an alternating magnetic field being generated. This magnetic field is guided by the tubular magnetic core.

When the power supply supplies a current to the primary coil, a current may be induced in the at least one secondary coil.

The at least one secondary coil is arranged so as to receive the magnetic field from the primary coil such that the magnetic field induces an electrical current in each of the at least one secondary coil. The induced current(s) may then be used to determine a position of the magnetic core within the secondary coil(s). This position may therefore be used to determine the position a component connected to the magnetic core.

The primary coil may comprise any suitable number of windings around its axis, such as ≥2, ≥5, ≥10, ≥20, or ≥50 windings.

Each of the at least one secondary coils may comprise any suitable number of windings, such as ≥2, ≥5, ≥10, ≥20, or ≥50 windings.

The magnetic core may have a uniform cross section (in the plane perpendicular to its longitudinal axis) along the length of the core.

The electromagnetic device may further comprise a bobbin, the bobbin comprising a bore, wherein the primary coil is positioned or wound around the exterior of the bobbin, and the magnetic core is located in the bore of the bobbin. The at least one secondary coil may also be positioned or wound around the bobbin.

The tubular magnetic core may be cylindrical, i.e. have a uniform cylindrical cross - section. In alternative embodiments, the tubular magnetic core may be another tubular shape, such as having an oval or other shaped cross-section.

The tubular magnetic core may be formed from a sheet comprising a first edge and a second edge, wherein the sheet has been rolled or bent around a longitudinal axis of the tubular magnetic core such that the first edge is aligned with the second edge.

The first edge may be adjacent, abutting or proximate the second edge.

The magnetic core may be formed such that the first edge is adjacent the second edge, and the first edge and the second edge may be equidistant from the central longitudinal axis of the tubular. There may therefore be no overlap between the first edge and the second edge of the metal sheet.

The sheet may comprise a first edge, a second edge, a third edge, and a fourth edge. In a substantially flat configuration, prior to forming the tubular magnetic core, the metal sheet may be rectangular, wherein first edge is parallel to and opposite the second edge, and the third edge is parallel to and opposite the fourth edge. In the tubular magnetic core (i.e. reshaped) configuration, the sheet may have been rolled such that the first edge and the second edge are brought proximate to or adjacent one another.

The sheet forming the tubular magnetic core may have a thickness of ≥0.2mm, ≥0.3mm, ≥0.4mm, ≥0.5mm, ≥0.8mm, ≥1mm, ≥2mm, ≥3mm, ≥4mm, ≥5mm, or ≥10mm. The sheet may have a uniform thickness.

An example not falling within the scope of the claims relates to the tubular magnetic core which may comprise a slit extending from a first longitudinal end of the tubular magnetic core to a second longitudinal end of the tubular magnetic core.

The slit is a discontinuity in the tubular magnetic core and may be defined by edges of the metal sheet, such as by the or a first edge and the or a second edge of the sheet. The slit in the magnetic core may extend from an exterior surface of the magnetic core to an interior surface of the magnetic core (i.e. completely through the tubular). The slit may be straight.

The slit may have a width uniform width of ≤1mm, ≤2mm, ≤3mm, ≤4mm, ≤5mm ≤10mm, ≤15mm, or ≥15mm.

The sheet may comprise a magnetisable material. The sheet may be a metal sheet. The sheet may comprise any suitable metal, such as mu-metal.

The tubular magnetic core may be moveable relative to the primary coil and the at least one secondary coil.

The core may be moveable relative to the primary coil and the at least one secondary coil in a longitudinal direction of the core. The core may share a longitudinal axis with the primary coil and the at least one secondary coil.

The transducer may comprise two secondary coils positioned around the tubular magnetic core.

When the power supply supplies a current to the primary coil, a current may be induced in the two secondary coils.

Each secondary coil may comprise the same number of windings.

The two secondary coils may be positioned around the core on opposing sides of the primary coil and optionally may be wound in opposite directions around the core. Each secondary coil may be located the same distance from the respective nearest end of the primary coil. The current induced in each secondary coil when the core is positioned centrally within the coils may be substantially equal in magnitude, and optionally in opposite directions.

The transducer may further comprise a control unit configured to measure a current and/or a voltage of the at least one secondary coil and optionally output a signal indicative of the position of the tubular magnetic core within the transducer based on the current and/or a voltage measured.

When a current is supplied to the primary coil, the current and/or voltage induced in the at least one secondary coil may be indicative of the position of the core relative to the primary and secondary coils, as the magnitude of the induction in the secondary coil may be indicative of the location of the magnetic core.

The at least one secondary coil may be two secondary coils. The primary coil may be located between the two secondary coils. The control unit may be configured to measure a current and/or a voltage of each of the secondary coils. The control unit may be configured to compare the currents and/or voltages of the secondary coils, which may be indicative of the location of the magnetic core.

The present disclosure also provides an actuator comprising a moveable member and the transducer as described above, wherein the tubular magnetic core is coupled to the moveable member.

The actuator may be any suitable actuator or system having a moveable member, wherein it may be is desired to determine the position of the moveable member.

The present disclosure also provides a method of forming a Linear Variable Differential Transducer as described above, comprising reshaping a sheet of magnetisable material to form a tubular magnetic core.

The magnetic core may have a substantially uniform cross section, such as a substantially circular cross section.

The sheet may comprise a metal, for example mu-metal, or any other suitable metal.

The reshaping may include rolling or folding the sheet into a tubular, optionally around a mandrel.

The method comprises reshaping the sheet having a first edge and an opposing second edge such that the first edge is aligned with the second edge in a circumferential direction of the tubular magnetic core.

The metal sheet comprises a first edge, a second edge, and may comprise a third edge, and a fourth edge. In a substantially flat configuration, the metal sheet may be rectangular, wherein first edge is parallel to and opposite the second edge, and the third edge is parallel to and opposite the fourth edge. The sheet is rolled or folded such that in the tubular (i.e. reshaped) form the first and edge and the second edge are brought proximate to or adjacent one another.

The first and second edges of the metal sheet are joined to one another to form a continuous tubular.

The first and second edges may be joined to one another by any suitable method, such as by welding, soldering, gluing or brazing.

An example not falling within the scope of the claims relates to the first and second edges which may be spaced apart so as to define an elongate slit in the tubular magnetic core.

An example not falling within the scope of the claims relates to the first and second edges which may not be joined together, leaving a slit therebetween. The slit may extend the length of the tubular, and may be straight. The slit may have a width uniform width of ≤1mm, ≤2mm, ≤3mm, ≤4mm, ≤5mm ≤10mm, ≤15mm, or ≥15mm.

### BRIEF DESCRIPTION OF DRAWINGS

Various embodiments will now be described, by way of example only, and with reference to the accompanying drawings in which:
Figures 1A and 1B show schematics of a Linear Variable Differential Transducer (LVDT) in which the magnetic core is arranged in different positions;
Figure 2 shows a cross-sectional view of a Linear Variable Differential Transducer (LVDT) that is attached to a load;
Figures 3A, 3B and 3C show a method of forming a magnetic core for the LVDT of Figures 1A, 1B and 2; and
Figure 4 shows an embodiment of a magnetic core 12, which may be formed by the method shown in Figures 3A-C.

### DETAILED DESCRIPTION

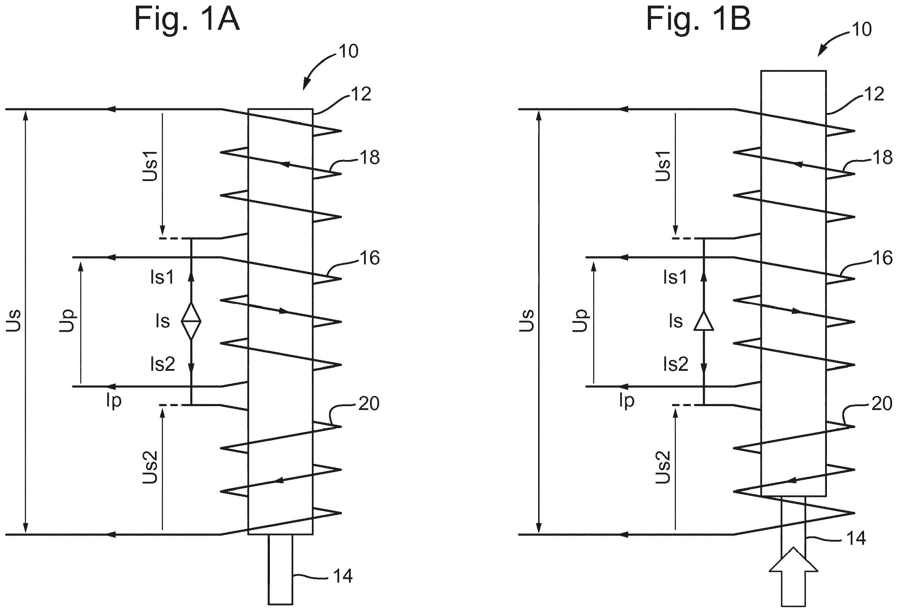

Figures 1A and 1B show a Linear Variable Differential Transducer (LVDT) 10 which may be used to detect or measure the displacement of a moving component. The LVDT 10 may comprise a magnetic core 12 mounted on a core support 14. The magnetic core 12 may comprise a soft magnetic material, e.g. Mu-metal, although other materials are contemplated herein. The magnetic core 12 may be in the form of a tubular structure. The magnetic core 12 may be attached or connected to the core support 14 by any suitable means, such as by welding, bonding, threaded engagement or interference fit.

Conventionally, magnetic cores have been formed or moulded as solid rods, or lathed from larger pieces of material.

The LVDT further comprises a primary coil 16 for generating a magnetic field when supplied with power, a first secondary coil 18 in which a current is induced by the magnetic field from the primary coil 16, and optionally a second coil 20 in which a current is induced by the magnetic field from the primary coil 16. The coils 16,18,20 may be wound a common axis. The first and second secondary coils 18,20 may be substantially identical (i.e. they may comprise the same material, the same number and/or pitch of windings, and may have the same dimensions). However, the secondary coils 18,20 may be wound around the axis in opposite directions.

The coils 16, 18, 20 may have the same longitudinal axis as the magnetic core 12 and optionally also as the core support 14. The coils 16, 18, 20 may wind around or encircle portions of the magnetic core in the longitudinal direction. The primary coil 16 may be located between the first secondary coil 18 and the second secondary coil 20, and may be equidistant from each. The magnetic core 12 and the core support 14 may move relative to the coils 16, 18, 20 along the longitudinal axis, allowing the magnetic core 12 to be displaced relative to the coils 16, 18, 20.

The primary coil 16 may be supplied with an alternating voltage Up (i.e. by an AC voltage supply), causing an alternating current Ip in the primary coil 16. This causes a magnetic field to be generated in the known manner, which is somewhat confined and focussed by the magnetic core 12. The magnetic core 12 helps transfer the magnetic field to the first and second secondary coils 18, 20, inducing currents Is1 and Is2 respectively in the first and second secondary coils 18,20. The first and second coils 18, 20 will thus have a potential differences Us1 and Us2 across them respectively. The resulting potential difference across the two secondary coils Us = Us1 + Us2.

LVDT may be used for various purposes, such as in valves and actuators, for example in engines.

Figure 1A shows the LVDT when the magnetic core 12 is located centrally within the coils 16, 18, 20 along the longitudinal axis, such that the magnetic core 12 extends the same distance into or beyond each of the first and second secondary coils 18, 20. When the primary coil 16 is supplied with an alternative voltage Up, the currents generated in the first and second secondary coils 18,20 will be of the same magnitude, but in opposite directions, i.e. Is1 = -ls2. The resultant potential difference Us of the combined secondary coils 18,20 will thus be zero.

Figure 1B shows the LVDT 10 when the magnetic core 12 has been displaced relative to the coils 16, 18, 20 from the central position along the longitudinal axis. In the depicted embodiment, the magnetic core 12 has been moved in the longitudinal direction towards the first secondary coil 18. The magnetic core 12 extends all the way through the first secondary coil 18, but only part way through the second secondary coil 20. When the primary coil 16 is supplied with the alternating voltage Up, currents Is1 and Is2 are generated in the first and second secondary coils 18, 20 as described above, and the current Is1 generated in the first secondary coil 18 will be greater in magnitude than the current Is2 generated in the second secondary coil 20. Therefore, the resultant potential difference Us across the secondary coils 18,20 will no longer be zero. In fact, the magnitude of the currents Is1 and Is2 (and hence the potential difference Us) may depend on the proportion of the coil through which the magnetic core 12 extends. Accordingly, the value of the potential difference Us is correlated to the position of the magnetic core 12.

The LVDT may include a control unit for measuring the currents Is1 and Is2 and/or the voltages Us1 and Us2 of the secondary coils 18,20. The control unit may include a processor to compare Us1 and Us2 and determine the resultant voltage Us. The resultant voltage may be indicative of the displacement of the magnetic core 12.

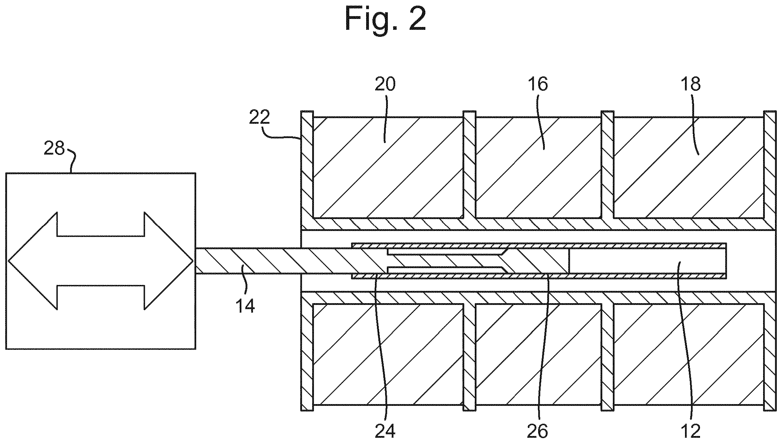

Figure 2 shows a side cross-sectional view of the Linear Variable Differential Transducer (LVDT) whilst attached to a moving member 28. The primary coil 16, first secondary coil 18 and second secondary coil 20 may be wound around and located on a bobbin 22. As described above, the magnetic core 12 may be a tubular. The core support 14 may be located partially within the magnetic core 12. The core support 14 may be attached to the interior of the magnetic core 12, for example, at two attachment locations 24, 26. The core support 14 may be attached by any suitable means, such as by welding, bonding, threaded connection or interference fit.

The core support 14 may be attached to the moving element 28. The moving element 28 may be a component of any suitable system, the position or movement of which is desired to be detected. For example, the moving element 28 may be a spool of a servovalve, or a moving part of any kind of actuator. The bobbin 22 may be attached to a housing of the system including the moving element 28.

The magnetic core 12 may move along the longitudinal axis in a sealed chamber (e.g. within the bobbin 22), which may contain air, another gas, or a liquid, such as a hydraulic fluid, for example Skydrol ^{®}. When the magnetic core 12 moves within the chamber, the fluid must therefore move from one side of the magnetic core 12 to the other side of the magnetic core 12 within the chamber. This may occur through a small clearance between the magnetic core 12 and surrounding surface of the chamber (e.g. the radially inner surface of the bobbin 22). This causes damping forces, which may affect and dampen the movement of the magnetic core 12.

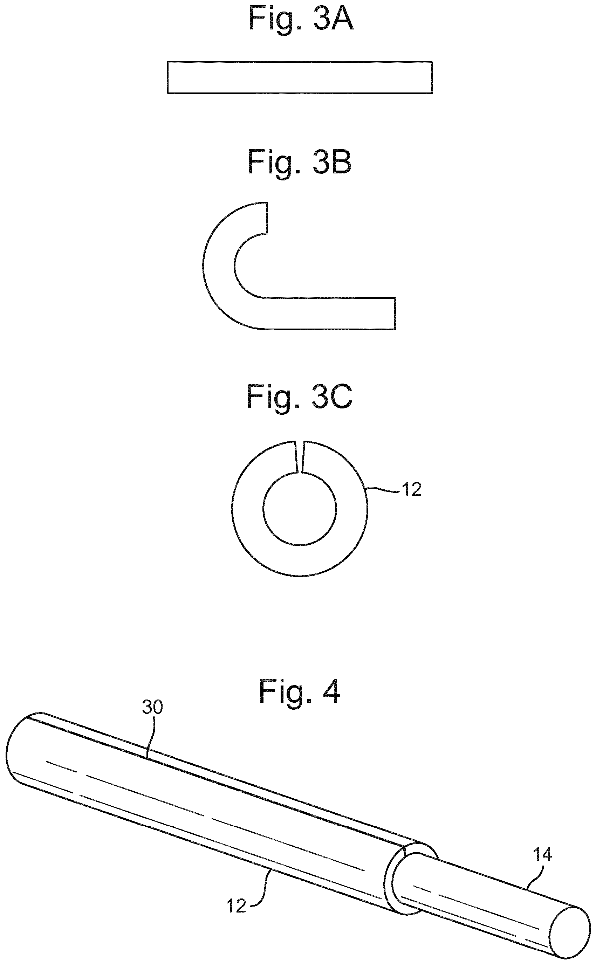

Figures 3A, 3B and 3C show a method of forming a magnetic core for the LVDT of Figures 1A, 1B and 2. The metal sheet may comprise a soft, ductile magnetic material. For example, the material may have 45% elongation at break, and be easily plastically formed. Figure 3A shows a side view of a flat metal sheet. Figure 3B shows the metal sheet of Figure 3A having been partially bent or rolled. Figure 3C shows the metal sheet of Figures 3A and 3B having been fully bent or rolled to be a tubular having a substantially circular cross section (transverse to the longitudinal axis of the core 12). As shown in Figure 3C, the metal sheet may be rolled or bent so that the opposing edges of the sheet are adjacent or proximate each other, and to align with one another in a circumferential direction. An example not falling within the scope of the claims relates to the edges which may not meet, thus resulting in a tubular having a discontinuity or slit along the length thereof. When the tubular of the magnetic core 12 includes such a discontinuity, this may be useful in the embodiments in which the magnetic core 12 is arranged in the fluid filled chamber, since the fluid in the sealed chamber may flow along the channel formed by the discontinuity, reducing the damping forces acting on the magnetic core 12. According to the claimed invention the edges of the sheet may meet, and/or the edges may be joined together by any suitable means, such as welding, soldering or adhesives. The sheet may be rolled or bent such that it does not overlap itself, e.g. the ends of the sheet do not overlap over portions of the sheet (e.g. the sheet is not rolled in a spiral). The tubular core 12 may therefore be formed so as to have only a single layer of the sheet arranged radially outward from its central axis.

In embodiments, the inventors have recognised relatively thin sheets can be used to make the core, especially in LVDT, as they monitoring the signal, rather than needing to strongly focus the magnetic field, which generally requires a thicker, solid magnetic core. A core formed from a sheet decreases the cost of material (e.g. because 100% of the material is used), and decreases manufacturing costs and times. Further, there may be some reduction in gross eddy currents as opposed to previous solid cores, and the cores may be more accurate, i.e. provide more uniform magnetic fields.

Figure 4 shows an embodiment of the magnetic core 12, which may be formed by the method shown in Figures 3A-C. An example not falling within the scope of the claims relates to the magnetic core 12 which may include a slit or discontinuity 30 along the length thereof. The magnetic core 12 is attached to a core support 14.

Although the present disclosure has been described with reference to various embodiments, it will be understood by those skilled in the art that various changes in form and detail may be made without departing from the scope of the accompanying claims.

For example, it is contemplated that only a single secondary coil may be used rather than the two coils 18,20, and the current induced in the single secondary coil may generate a potential difference across that coil that may be used to determine the position of the magnetic core 12.

## Claims

1. A linear variable differential transducer (10) comprising:
a tubular magnetic core (12) formed from a sheet; and
a primary coil (16) and at least one secondary coil (18, 20), each coil (16, 18, 20) positioned around a portion of a length of the magnetic core (12);
wherein the tubular magnetic core (12) is formed from a sheet comprising a first edge and a second edge, wherein the sheet has been rolled or bent around a longitudinal axis of the tubular magnetic core such that the first edge is aligned with the second edge, and the first and second edges of the sheet are joined to one another to form a continuous tubular (12).

2. The transducer (10) of claim 1, comprising an electrical power supply connected to the primary coil (16) for generating a current therein.

3. The transducer (10) of any preceding claim, wherein the tubular magnetic core (12) is moveable relative to the primary coil (16) and the at least one secondary coil (18, 20).

4. The transducer (10) of any preceding claim, comprising two secondary coils (18, 20) positioned around the tubular magnetic core (12).

5. The transducer (10) of any preceding claim, further comprising a control unit configured to measure a current and/or a voltage of the at least one secondary coil and optionally output a signal indicative of the position of the tubular magnetic core (12) within the transducer (10) based on the current and/or a voltage measured.

6. An actuator comprising a moveable member (28) and the transducer (10) of any preceding claim, wherein the tubular magnetic core (12) is coupled to the moveable member (28).

7. A method of forming the linear variable differential transducer of any preceding claim, comprising reshaping the sheet of magnetisable material to form a tubular magnetic core (12) such that the first edge is aligned with the second edge in a circumferential direction of the tubular magnetic core, and joining the first and second edges of the sheet to one another to form a continuous tubular (12).

8. The method of claim 7, wherein the reshaping includes rolling or folding the sheet into a tubular (12), optionally around a mandrel.

## Patentansprüche

1. Linearer variabler Differenzialwandler (10), umfassend:
einen rohrförmigen Magnetkern (12), der aus einem Blech geformt ist; und
eine Primärspule (16) und mindestens eine Sekundärspule (18, 20), wobei jede Spule (16, 18, 20) um einen Abschnitt einer Länge des Magnetkerns (12) angeordnet ist;
wobei der rohrförmige Magnetkern (12) aus einem Blech, das eine erste Kante und eine zweite Kante umfasst, geformt ist, wobei das Blech derart um eine Längsachse des rohrförmigen Magnetkerns gerollt oder gebogen wurde, dass die erste Kante mit der zweiten Kante ausgerichtet ist und die erste und die zweite Kante des Blechs miteinander verbunden sind, um ein kontinuierliches Rohr (12) zu bilden.

2. Wandler (10) nach Anspruch 1, umfassend eine elektrische Stromversorgung, die mit der Primärspule (16) verbunden ist, um in dieser einen Strom zu erzeugen.

3. Wandler (10) nach einem der vorhergehenden Ansprüche, wobei der rohrförmige Magnetkern (12) relativ zu der Primärspule (16) und der mindestens einen Sekundärspule (18, 20) beweglich ist.

4. Wandler (10) nach einem der vorhergehenden Ansprüche, umfassend zwei Sekundärspulen (18, 20), die um den rohrförmigen Magnetkern (12) angeordnet sind.

5. Wandler (10) nach einem der vorhergehenden Ansprüche, ferner umfassend eine Steuereinheit, die konfiguriert ist, um einen Strom und/oder eine Spannung der mindestens einen Sekundärspule zu messen und optional ein Signal auszugeben, das die Position des rohrförmigen Magnetkerns (12) innerhalb des Wandlers (10) basierend auf dem gemessenen Strom und/oder der gemessenen Spannung angibt.

6. Stellglied, umfassend ein bewegliches Element (28) und den Wandler (10) nach einem der vorhergehenden Ansprüche, wobei der rohrförmige Magnetkern (12) mit dem beweglichen Element (28) gekoppelt ist.

7. Verfahren zum Herstellen des linearen variablen Differenzialwandlers nach einem der vorhergehenden Ansprüche, umfassend Umformen des Blechs aus magnetisierbarem Material, um einen rohrförmigen Magnetkern (12) zu formen, derart dass die erste Kante mit der zweiten Kante in einer Umfangsrichtung des rohrförmigen Magnetkerns ausgerichtet ist, und Miteinanderverbinden der ersten und der zweiten Kante der Folie, um ein durchgehendes Rohr (12) zu formen.

8. Verfahren nach Anspruch 7, wobei das Umformen Rollen oder Falten des Blechs zu einem rohrförmigen (12) Blech, gegebenenfalls um einen Dorn, beinhaltet.

## Revendications

1. Transducteur différentiel variable linéaire (10) comprenant :
un noyau magnétique tubulaire (12) formé à partir d'une feuille ; et
un enroulement primaire (16) et au moins un enroulement secondaire (18, 20), chaque enroulement (16, 18, 20) étant positionné autour d'une partie d'une longueur du noyau magnétique (12) ;
dans lequel le noyau magnétique tubulaire (12) est formé à partir d'une feuille comprenant un premier bord et un second bord, dans lequel la feuille a été roulée ou pliée autour d'un axe longitudinal du noyau magnétique tubulaire de sorte que le premier bord soit aligné avec le second bord, et les premier et second bords de la feuille sont assemblés l'un à l'autre pour former un tube continu (12).

2. Transducteur (10) selon la revendication 1, comprenant une alimentation électrique connectée à l'enroulement primaire (16) pour y générer un courant.

3. Transducteur (10) selon une quelconque revendication précédente, dans lequel le noyau magnétique tubulaire (12) est mobile par rapport à l'enroulement primaire (16) et l'au moins un enroulement secondaire (18, 20).

4. Transducteur (10) selon une quelconque revendication précédente, comprenant deux enroulements secondaires (18, 20) positionnés autour du noyau magnétique tubulaire (12).

5. Transducteur (10) selon une quelconque revendication précédente, comprenant en outre une unité de commande configurée pour mesurer un courant et/ou une tension de l'au moins un enroulement secondaire et éventuellement émettre un signal indicatif de la position du noyau magnétique tubulaire (12) à l'intérieur du transducteur (10) sur la base du courant et/ou d'une tension mesurés.

6. Actionneur comprenant un élément mobile (28) et le transducteur (10) selon une quelconque revendication précédente, dans lequel le noyau magnétique tubulaire (12) est couplé à l'élément mobile (28).

7. Procédé de formation du transducteur différentiel variable linéaire selon une quelconque revendication précédente, comprenant le remodelage de la feuille de matériau magnétisable pour former un noyau magnétique tubulaire (12) de sorte que le premier bord soit aligné avec le second bord dans une direction circonférentielle du noyau magnétique tubulaire, et l'assemblage des premier et second bords de la feuille l'un à l'autre pour former un tube continu (12).

8. Procédé selon la revendication 7, dans lequel le remodelage comporte le roulage ou le pliage de la feuille en un tube (12), éventuellement autour d'un mandrin.
